**Europäisches Patentamt**

**European Patent Office**

**Office européen des brevets**

(19)

(11) Veröffentlichungsnummer: **0 324 722 B1**

(12) **EUROPÄISCHE PATENTSCHRIFT**

(45) Veröffentlichungstag der Patentschrift:
**21.11.91 Patentblatt 91/47**

(51) Int. Cl.⁵: **B62D 33/02**

(21) Anmeldenummer: **89810024.3**

(22) Anmeldetag: **11.01.89**

(54) **Bordwand.**

(30) Priorität: **14.01.88 CH 135/88**

(43) Veröffentlichungstag der Anmeldung:
**19.07.89 Patentblatt 89/29**

(45) Bekanntmachung des Hinweises auf die
Patenterteilung:
**21.11.91 Patentblatt 91/47**

(84) Benannte Vertragsstaaten:
**AT BE CH DE ES FR GB IT LI NL SE**

(56) Entgegenhaltungen:
**CH-A- 512 697**
**DE-A- 1 559 512**
**DE-B- 1 112 098**
**FR-A- 1 369 730**
**FR-A- 2 125 088**

(73) Patentinhaber: **ALUSUISSE-LONZA**
**SERVICES AG**
**Feldeggstrasse 4**
**CH-8034 Zürich (CH)**

(72) Erfinder: **Utz, Manfred**
**Pfruendhofstrasse 19**
**CH-8910 Affoltern am Albis (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 324 722 B1

## Beschreibung

Die vorliegende Erfindung betrifft eine Bordwand, insbesondere für eine Lastwagenbrücke, bestehend aus mindestens zwei Leichtmetallplanken, die durch eine Steckverbindung in gleicher Ebene zusammen gehalten werden, welche Verbindung durch einander zugewandte, als Rinnen ausgebildete Längsränder der Planken und ein in den durch zwei aneinander stossende Rinnen gebildeten zylinderförmigen Hohlraum eingeführtes Fixierorgan, insbesondere eine wendelförmig gerollte Blattfeder, gebildet wird, wobei die Rinnen an den Längsrändern der Planken teilweise offen sind und so ineinander greifen, dass ein Teil der Rinne der einen Planke einen Teil der Rinne der anderen Planke übergreift und der andere Teil der Rinne der einen Planke von einem entsprechenden Teil der Rinne der anderen Planke übergriffen wird, wobei die Ausbildung der Innenflächen der übergreifenden Teile den Aussenflächen der übergriffenen Teile entspricht.

Eine derartige Bordwand ist aus AT-A-317001 bekannt. Dabei sind die übergreifenden und übergriffenen Teile mit kreisbogenförmig ausgebildeten Kontaktflächen versehen. Eine solche Ausbildung hat den Nachteil, dass sich die Planken verdrehen können, insbesondere beim Zusammenfügen zur Bordwand vor Einbringen des Fixierorgans, da die die Bordwand stabilisierenden Auflageflächen nur geringe Ausmasse aufweisen. Die Montage ist dadurch erschwert. Bei Verwendung von stranggepressten Grossprofilen als Planken macht sich dieser Nachteil besonders bemerkbar und behindert die Montage bereits derart, dass in der Praxis aufwendige Montagelehren notwendig sind.

Aufgabe der vorliegenden Erfindung ist es daher, den Nachteil, insbesondere bei Verwendung von stranggepressten Grossprofilen aus Leichtmetall, zu beheben. Des weiteren ist Aufgabe der Erfindung, die Montage der Planken zur Bordwand zu erleichtern und insbesondere bei Verwendung von Grossprofilen die Verbindung der Profile zu verstärken.

Erfindungsgemäss wird die gestellte Aufgabe durch eine Bordwand gelöst, welche sich nach dem Wortlaut des Anspruchs 1 auszeichnet. Vorteilhafte Weiterbildungen der erfindungsgemässen Bordwand sind durch die Merkmale der Ansprüche 2 bis 10 gekennzeichnet.

Auf Grund der ebenflächig ausgebildeten Innen- und Aussenflächen der übergreifenden bzw. übergriffenen Teile ist bei ineinandergreifenden Planken ein Verdrehen nicht mehr möglich. Zusätzlich wirken die schräg zur Ebene der Planken liegenden Innen- und Aussenflächen als Führungsflächen bei der Montage, indem die sich berührenden, aber noch nicht endgültig positionierten Planken sich selbst führend in die endgültige Position gleiten und anschliessend durch das Fixierorgan in dieser Position gesichert werden.

Bei Grossprofilen erfolgt die Verstärkung der Verbindung im wesentlichen durch das Einführen einer zweiten, analog wie die erste Rinne ausgeführten Rinne, welche ebenfalls mit einem Fixierorgan gesichert wird. Zusätzlich kann die Verbindung durch Verkleben der formschlüssigen Flächen verstärkt werden, wobei im Fall der zweifachen Rinnenausbildung insbesondere die Oberfläche durch die eben ausgebildete Oberfläche des Stegs vergrössert wird.

Wenn die Dicke der einzelnen Planken eine doppelte Rinnenausbildung in Querrichtung zur Ebene der Planken nicht zulässt, ist es dennoch möglich, durch Schrägversetzen der Rinnen – der die Rinnen verbindende Steg liegt dann schräg zur Ebene der Planken -- von dieser vorteilhaften Ausbildungsform Gebrauch zu machen.

Weiter Vorteile Merkmale und Einzelheiten ergeben sich aus der Zeichnung ; diese zeigt schematisch im Querschnitt in

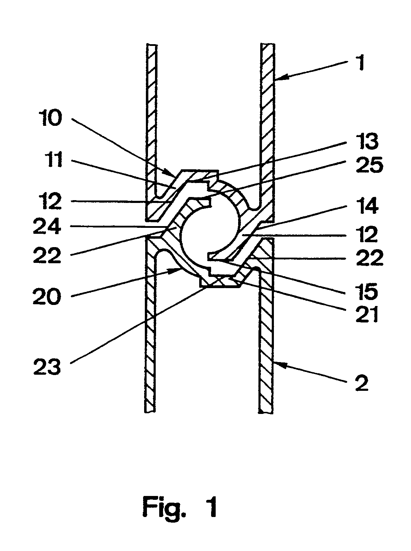

Fig. 1   zwei Planken der Uebersichtlichkeit halber kurz von dem endgültigen Zusammenfügen,

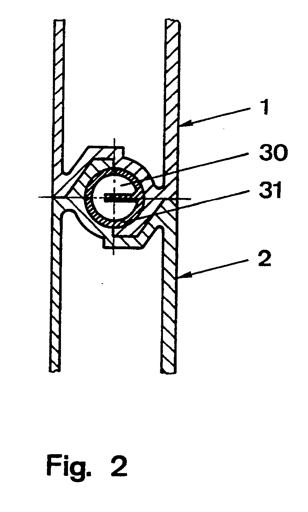

Fig. 2   die Planken von Fig. 1 im zusammengefügten Zustand mit eingebrachtem Fixierorgan,
Fig. 3   zwei Planken mit je doppelter Rinnenausbildung in Schrägversetzung und in
Fig. 4   zwei Planken mit doppelter quer zur Ebene der Planken liegender Rinnenausbildung.

Die Bordwand besteht aus mindestens zwei Planken 1, 2, die nach formschlüssigem Kontakt mit Hilfe eines in den zylindrischen Hohlraum 30 eingeführten Fixierorgans 31 verbunden sind.

Die Längsränder der Planken 1, 2, die mit einer benachbarten Planke in Kontaktverbindung stehen, sind als teilweise offene Rinnen 10, 20 ausgebildet. Nach Zusammenfügung der Planken 1, 2 zu einer Bordwand übergreift ein Teil 11 der Rinne 10 der einen Planke 1 einen Teil der Rinne 20 der anderen Planke 2 und umgekehrt wird der andere Teil 12 der Rinne 10 der einen Planke 1 von einem entsprechenden Teil 21 der Rinne 20 übergriffen. Die Ausbildung der Innenflächen 12, 22 der übergreifenden Teile 11, 21 entspricht den Aussenflächen 14, 24 der übergreifenden Teile 12, 22, wobei die Innenflächen 12, 22 und die Aussenflächen 14, 24 mindestens teilweise als ebene Flächen, welche als Führungsflächen bei der Montage der Planken 1, 2 dienen, ausgebildet sind.

Vorteilhaft ist es, die Innen- und Aussenflächen 12, 22, 14, 24 gesamthaft eben auszubilden und des wei-

2

teren mindestens teilweise schräg zur Ebene der Planken 1, 2 anzuordnen. Durch die mindestens teilweise schräge Anordnung der Innen- und Aussenflächen 12, 22, 14, 24 fügen — als besonders vorteilhaft hat sich ein gegenüber der Ebene der Planken 1, 2 abweichender Winkel von 15° bis 35° erwiesen — sich die eventuell während der Montage nicht passgenau zueinander stehenden Planken 1, 2 beim Zusammenschieben von selbst in die für die endgültige Verbindung notwendige Lage, womit sich eine Montagelehre erübrigt.

Von weiterem Vorteil ist es, dass, wenn die Innenflächen 12, 22 und die Aussenflächen 14, 24 aus mehreren Flächen bestehen, die im Querschnitt der Mittellinie der Planken 1,2 nahen Teilflächen 13, 23 bzw. 15, 25 quer zu der Ebene der Planken 1, 2 liegen. Diese Teilflächen 13, 23, 15, 25 dienen als Stützelement der einzelnen Planken und bewirken eine erhöhte Belastbarkeit der Bordwand sowohl von der grossflächigen Seite als auch von der Stirnseite.

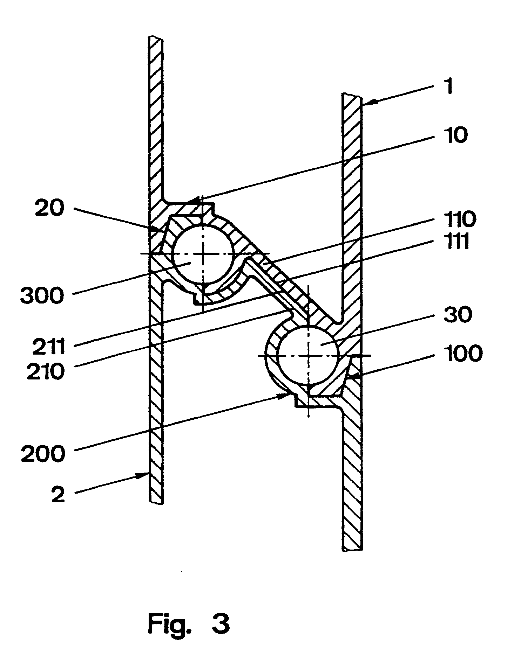

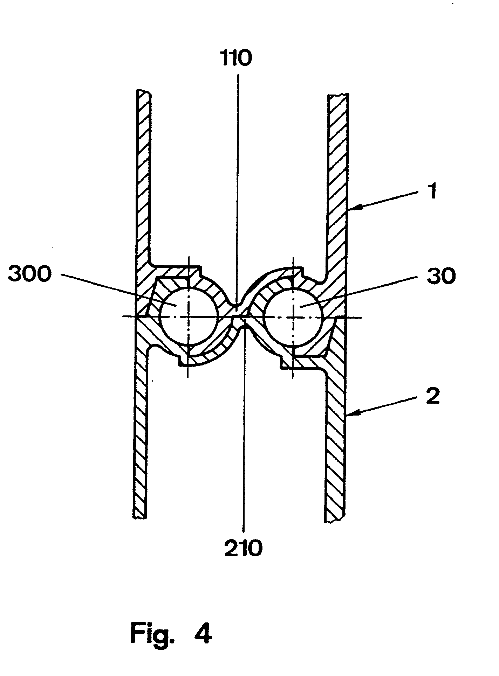

Zur weiteren Verstärkung und damit Erhöhung der Belastbarkeit der Bordwand hat es sich als vorteilhaft erwiesen, bei Verwendung von Grossraumprofilen, insbesondere von Grossraumprofilen aus Leichtmetall, für die Planken 1, 2, die Längsränder derselben jeweils mit mindestens einer weiteren analog wie die Rinnen 10, 20 aufgebauten Rinne 100, 200 zu versehen. Dabei kann je nach Dicke des Längsprofils die eine Rinne 10 bzw. 20 entweder ohne Steg, mit einem sehr kurzen Steg 110, 210, wie es Figur 4 zeigt, oder mit einem sehr ausgeprägten Steg 110, 210, wie es Figur 3 zeigt, mit der anderen Rinne 100 bzw. 200 verbunden sein. Die Achsenebene der zylinderförmigen Hohlräume 30, 300, welche beim Zusammenfügen von mit zwei Rinnen 10, 100 bzw. 20, 200 versehenen Planken 1, 2 entstehen, liegt üblicherweise quer zur Ebene der Planken 1, 2. Vorteilhaft weist dabei der Steg 110, 210 eine nicht zu kurze Länge auf, denn dieser dient im oben angeführten Sinne wiederum als Stützelement und trägt zur verstärkten Belastung der Bordwand bei.

Sollte ein vorgegebenes Dickenmass einer Planke 1, 2 eine an sich erwünschte lange Ausbildung des Stegs 110, 210 nicht zulassen, so werden die beiden Rinnen 10, 100 bzw. 20, 200 vorteilhaft versetzt angeordnet und durch einen schräg gestellten Steg 110, 210, wie es Figur 3 zeigt, verbunden.

Eine aus derartigen Planken 1, 2 gefertigte Bordwand, insbesondere wenn die Verbindung durch eine Verklebung zusätzlich verstärkt worden ist, weist eine hohe Belastbarkeit sowohl von der flächigen Seite als auch von der Stirnseite auf.

Neben der Verklebung der Kontaktflächen der Planken 1, 2 ist zur weiteren Verstärkung der Bordwand mindestens teilweises Verschweissen der sichtbaren Fugen der aneinander stossenden Planken 1, 2 vorgesehen. Vorteilhaft sind die Planken 1, 2 zumindest an den für die Verschweissung vorgesehenen Stellen angefast.

## Patentansprüche

1. Bordwand, insbesondere für eine Lastwagenbrücke, bestehend aus mindestens zwei Leichtmetallplanken (1, 2), die durch eine Steckverbindung in gleicher Ebene zusammen gehalten werden, welche Verbindung durch einander zugewandte, als Rinnen (10, 20) ausgebildete Längsränder der Planken (1, 2) und ein in den durch zwei aneinander stossende Rinnen (10, 20) gebildeten zylinderförmigen Hohlraum (30) eingeführtes Fixierorgan (31), insbesondere eine wendelförmig gerollte Blattfeder, gebildet wird, wobei die Rinnen (10, 20) an den Längsrändern der Planken (1, 2) teilweise offen sind und so ineinander greifen, dass ein Teil (11) der Rinne (10) der einen Planke (1) einen Teil (22) der Rinne (20) der anderen Planke (2) übergreift und der andere Teil (12) der Rinne (10) der einen Planke (1) von einem entsprechenden Teil (21) der Rinne (20) der anderen Planke (2) übergriffen wird, wobei die Ausbildung der Innenflächen (12, 22) der übergreifenden Teile (11, 21) den Aussenflächen (14, 24) der übergriffenen Teile (12, 22) entspricht, dadurch gekennzeichnet, dass die Innenflächen (12, 22) und die Aussenflächen (14, 24) mindestens teilweise als ebene Flächen ausgebildet sind.

2. Bordwand nach Anspruch 1, dadurch gekennzeichnet, dass die Innenflächen (12, 22) und die Aussenflächen (14, 24) gesamthaft als ebene Flächen ausgebildet sind.

3. Bordwand nach Anspruch 1 oder 2, dadurch gekennzeichnet, dass die Innenflächen (12, 22) und die Aussenflächen (14, 24) mindestens teilweise schräg zur Ebene der Planken (1, 2) liegen.

4. Bordwand nach Anspruch 3, dadurch gekennzeichnet, dass im Querschnitt der Mittellinie der Planken (1, 2) nahen Teilflächen (13, 23 ; 15, 25) der Innenflächen (12, 22) und der Aussenflächen (14, 24) quer zu der Ebene der Planken (1, 2) liegen.

5. Bordwand nach einem der Ansprüche 1 bis 4, dadurch gekennzeichnet, dass die Längsränder der Planken (1, 2) jeweils mindestens eine weitere analog wie die Rinnen (10, 20) aufgebaute Rinne (100, 200) aufweisen.

6. Bordwand nach Anspruch 5, dadurch gekennzeichnet, dass die beiden Rinnen (10, 100 bzw. 20, 200) durch einen eine ebene Fläche (111 bzw. 211) aufweisenden Steg (110 bzw. 210) verbunden sind.

7. Bordwand nach Anspruch 5 oder 6, dadurch gekennzeichnet, dass die Achsenebene der zylinderförmigen Hohlräume (30, 300) quer zur Ebene der Planken (1, 2) liegt.

EP 0 324 722 B1

8. Bordwand nach Anspruch 5 oder 6, dadurch gekennzeichnet, dass die Achsenebene der beiden Hohlräume (30, 300) schief zur Ebene der Planken (1, 2) liegt.

9. Bordwand nach einem der Ansprüche 1 bis 8, dadurch gekennzeichnet, dass die Verbindung durch eine Verklebung zusätzlich verstärkt wird.

10. Bordwand nach einem der Ansprüche 1 bis 9, dadurch gekennzeichnet, dass die Verbindung durch mindestens teilweises Verschweissen der sichtbaren Fugen der Planken (1, 2) verstärkt wird.


## Claims

1. Platform gate, in particular for a truck platform, consisting of two or more light metal planks (1, 2) which are held together in the same plane by an interlocking connection, which connection is formed by longitudinal edges of the planks (1, 2) facing towards each other and constructed as grooves (10, 20) and a fixing member (31) introduced into the cylindrical cavity (30) formed by two contiguous grooves (10, 2), in particular a helically wound leaf spring, wherein the grooves (10, 20) are partially open at the longitudinal edges of the planks (1, 2) and engage in each other in such a way that one portion (11) of the groove (10) of one plank (1) overlaps one portion (22) of the groove (20) of the other plank (2), and the other portion (12) of the groove (10) of the first plank (1) is overlapped by a corresponding portion (21) of the groove (20) of the second plank (2), wherein the construction of the inner surfaces (12, 22) of the overlapping portions (11, 21) corresponds to the outer surfaces (14, 24) of the overlapped portions (12, 22), characterised in that the inner surfaces (12, 22) and the outer surfaces (14, 24) are at least partially constructed as plane surfaces.

2. Platform gate according to claim 1, characterised in that the inner surfaces (12, 22) and the outer surfaces (14, 24) are constructed totally as plane surfaces.

3. Platform gate according to claim 1 or 2, characterised in that the inner surfaces (12, 22) and the outer surfaces (14, 24) are located at least partially at an angle to the plane of the planks (1, 2).

4. Platform gate according to claim 3, characterised in that partial surfaces (13, 23 ; 15, 25) of the inner surfaces (12, 22) and of the outer surfaces (14, 24), which are close to the centre line of the planks (1, 2) in cross-section, are located transversely to the plane of the planks (1, 2).

5. Platform gate according to any of claims 1 to 4, characterised in that the longitudinal edges of the planks (1, 2) each comprise at least one additional groove (100, 200) constructed similarly to the grooves (10, 20).

6. Platform gate according to claim 5, characterised in that the two grooves (10, 100 and 20, 200) are connected by a web (110 and 210) comprising a plane surface (111 and 211).

7. Platform gate according to claim 5 or 6, characterised in that the axial plane of the cylindrical cavities (30, 300) lies transversely to the plane of the planks (1, 2).

8. Platform gate according to claim 5 or 6, characterised in that the axial plane of the two cavities (30, 300) lies at an oblique angle to the plane of the planks (1, 2).

9. Platform gate according to any of claims 1 to 8, characterised in that the connection is additionally strengthened by glueing.

10. Platform gate according to any of claims 1 to 9, characterised in that the connection is strengthened by at least partial welding of the visible joints of the planks (1, 2).


## Revendications

1. Paroi de bordure, destinée notamment à un pont pour poids lourds, composée au moins deux panneaux (1, 2) en métal léger assemblés par un raccord encastrable dans le même plan, lequel raccord est formé par les bords longitudinaux des panneaux (1, 2) tournés l'un vers l'autre, et ayant la forme de gouttières (10, 20) et par un élément de fixation introduit dans la cavité (30) cylindrique formée par deux gouttières (10, 20) contiguës, notamment par un ressort à lames enroulé en spirale, les gouttières (10, 20) sur les bords longitudinaux des panneaux (1, 2) étant partiellement ouvertes et s'emboîtant l'une dans l'autre de telle sorte qu'une partie (11) de la gouttière (10) d'un panneau (1) emboîte une partie (22) de la gouttière (20) de l'autre panneau (2) et que l'autre partie (12) de la gouttière (10) d'un panneau (1) est emboîtée par une partie correspondante (21) de la gouttière (20) de l'autre panneau (2), la forme des surfaces internes (12, 22) des parties emboîtantes (11, 21) correspondant aux surfaces externes (14, 24) des parties emboîtées (12, 22), caractérisée en ce que les surfaces internes (12, 22) et les surfaces externes (14, 24) ont au moins partiellement la forme de surfaces planes.

2. Paroi de bordure selon la revendication 1, caractérisée en ce que les surfaces internes (12, 22) et les surfaces externes (14, 24) ont dans l'ensemble la forme de surfaces planes.

4

3. Paroi de bordure selon la revendication 1 ou 2, caractérisée en ce que les surfaces internes (12, 22) et les surfaces externes (14, 24) sont au moins partiellement à l'oblique par rapport au plan des panneaux (1, 2).

4. Paroi de bordure selon la revendication 3, caractérisée en ce que les surfaces partielles (13, 23 ; 15, 25) des surfaces internes (12, 22) et des surfaces externes (14, 24), proches en section transversale de l'axe des panneaux (1, 2) sont perpendiculaires au plan des panneaux (1, 2).

5. Paroi de bordure selon l'une des revendications 1 à 4, caractérisée en ce que les bords longitudinaux des panneaux (1, 2) présentent au moins une autre gouttière (100, 200) conçue de façon analogue aux gouttières (10, 20).

6. Paroi de bordure selon la revendication 5, caractérisée en ce que les deux gouttières (10, 100) ou (20, 200) sont raccordées par une entretoise (110 ou 210) présentant une surface plane (111 ou 211).

7. Paroi de bordure selon la revendication 5 ou 6, caractérisée en ce que le plan des axes des cavités (30, 300) cylindriques est perpendiculaire au plan des panneaux (1, 2).

8. Paroi de bordure selon la revendication 5 ou 6, caractérisée en ce que le plan des axes des deux cavités (30, 300) est oblique par rapport au plan des panneaux (1, 2).

9. Paroi de bordure selon l'une des revendications 1 à 8, caractérisée en ce que le raccord est renforcé en outre par un collage.

10. Paroi de bordure selon l'une des revendications 1 à 9, caractérisée en ce que le raccord est renforcé par soudage au moins partiel des joints visibles des panneaux (1, 2).

**Fig. 1**

1

30

31

2

# Fig. 2

Fig. 3

EP 0 324 722 B1

Fig. 4

9